(19) Europäisches Patentamt
European Patent Office
Office européen des brevets

(11) **EP 3 291 512 A1**

(12) **EUROPEAN PATENT APPLICATION**

(43) Date of publication:
07.03.2018 Bulletin 2018/10

(51) Int Cl.:
*H04L 29/12* (2006.01)     *G06F 9/50* (2006.01)
*H04L 29/08* (2006.01)     *H04L 29/06* (2006.01)

(21) Application number: 16187483.9

(22) Date of filing: 06.09.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Koninklijke KPN N.V.
2516 CK The Hague (NL)

(72) Inventor: Karsten, Cornelis
2496 PK The Hague (NL)

(74) Representative: Wuyts, Koenraad Maria
Koninklijke KPN N.V.
Intellectual Property Group
P.O. Box 95321
2509 CH Den Haag (NL)

(54) **DNS QUERY PROCESSING**

(57)     A method may be arranged for a Domain Name System server to provide a DNS record to a DNS client. The method may comprise:
- receiving a query from the DNS client, the DNS client having an IP address,
- processing the IP address, by using a mapping function (20), to produce a selection number (SN),
- selecting, by using the selection number (SN), at least one DNS record from a table (23) of DNS records, and

- transmitting the at least one selected DNS record to the DNS client.
The mapping function (20) may comprise a conversion function (21) and/or a reduction function (22), and may be arranged for the selection number (SN) to have a substantially smaller range than the IP address. The conversion function (21) may be arranged such that its output values are more evenly spread over their range than its input values.

Fig. 2

## Description

### Field of the Invention

The present invention relates to Domain Name Service (DNS) query processing. More in particular, the present invention relates to a method for a DNS server to provide a DNS record to a DNS client, and to a DNS server arranged to provide a DNS record to a DNS client.

### Background of the Invention

A DNS server (also referred to as DNS name server) is a server that stores the DNS (Domain Name Service) records for a domain, such as an internet domain. A DNS server typically has a DNS records database and when queried may respond with answers to queries against its database.

DNS servers may be used for various applications. In Voice over Internet Protocol (VoIP) networks, for example, a modem at the premises of a customer may require the Internet Protocol (IP) address of at least one proxy server with which it may communicate. Such proxy servers may, in turn, communicate with at least one further server acting as a VoIP telephone exchange. In such settings, a modem may constitute a DNS client which requires a DNS record identifying the proxy server.

A modem, acting as a DNS client, may therefore issue a request for a DNS record to a DNS server. An IP address can be associated with such a request, in which case the IP address may be the IP address of the modem. A way for the DNS server to obtain the DNS record corresponding with the request is looking up the DNS record in a table or list, using the IP address associated with the request. However, in practice this may be difficult to implement.

It is known that IP addresses have a large range. Internet Protocol version 4 (IPv4) uses 32-bit addresses, thus theoretically providing a range from 0 to 4,294,967,295 (= $2^{32}$-1). Internet Protocol version 6 (IPv6) uses 128-bit addresses, thus theoretically providing a range from 0 to approximately 3.40 x $10^{38}$ (= $2^{128}$-1). Such ranges make it unpractical or even unfeasible to use the IP address to look up an item, such as a DNS record, in a table or a list.

### Summary of the Invention

It is an object of the present invention to solve this problem by providing a method to provide a Domain Name Service (DNS) record to a DNS client, the method comprising:

- receiving a query from the DNS client having an IP address,
- processing the query, by using a mapping function, to produce a selection number,
- selecting, by using the selection number, at least one DNS record from a table of DNS records, and
- transmitting the at least one selected DNS record to the DNS client,

wherein the mapping function is arranged for the selection number to have a substantially smaller range than the IP address. The method may be carried out by a DNS server, for example.

By arranging the mapping function in such a way that the range of the selection number output by the mapping function is substantially smaller than the range of the IP address input into the mapping function, using the selection number to subsequently select one or more DNS records from a list (or table) is simplified. In particular, the list used to select the at least one DNS record from may be substantially shorter, thus making it feasible to use a list or table to look up a corresponding DNS record. In addition, the substantially reduced list length saves memory and makes maintenance of the list (or lists) simpler and hence more economical.

The substantially smaller range of the selection number, compared to the IP address, may mean that the range of the selection number is at least 10 times, preferably at least 100 times, and more preferably at least 1000 times smaller than the range of the IP address (as mentioned above, the range of an IP address according to IPv4 typically equals 4,294,967,295). A suitable range of the selection number may, for example, be 100, but larger or smaller ranges may also be used, and may be selected depending on the particular application and the selection number of DNS records. For example, a range equal to only 4 or 10 may be used, but a range equal to 200 or 500 may also be suitable. The range used may depend on the number of DNS clients.

The mapping function may comprise using only n digits of the IP address, for example the n final digits, wherein n is equal to or larger than 2, and wherein n is preferably smaller than 6, more preferably smaller than 4. By using only n digits of the IP address, the range of the selection number is significantly reduced. For example, by using only the last 2 digits, the range of the selection number is reduced to 100. This range reducing effect of the mapping function may at least partially be achieved by a reduction function, which the mapping function may comprise.

The mapping function may additionally, or alternatively, comprise a conversion function having input values and output values, the output values of the conversion function being more evenly spread than the input values. Having a more even spread may imply having a distribution function with a more even spread. By spreading the output values, and hence the values of the selection number, a more even distribution of the selected DNS records may be obtained.

In some embodiments, the conversion function may comprise a hash function, for example a cryptographic hash function. Hash functions are known *per se* and may be used to map data of arbitrary size onto data of fixed size. A cryptographic hash function is a one-way function for which it is unfeasible to derive the input value from the output value.

In some embodiments, the range of the selection number may be equal to, or is smaller than, 100. The range of the selection number may in some embodiments be even smaller, for example less than 20, or less than 10, or less than 5. In some embodiments, the range of the selection number may be equal to 4, or even to less than 4, for example 2.

Selecting the at least one DNS record may be carried out on the basis of a sub-range of the selection number. That is, the range of the selection number may be divided into sub-ranges, and each sub-range may correspond to a single DNS record. If the range of the selection number is equal to 100, for example, and if there are 4 different DNS records, then a first sub-range may include the numbers 1 to 25, for example, a second sub-range the numbers 26 to 50, etc..

The mapping function may be arranged to select the same at least one DNS record in response to the same selection number. In such embodiments, the same DNS record is selected for each query associated with the same IP address. In such embodiments, it may still be possible to amend the mapping function, for example by amending a table or list, which may result in a different DNS record being selected after the amendment. That is, in such embodiments the DNS record selection may be semi-permanent.

In some embodiments, the DNS record may comprise a proxy ID, that is, the identification of a proxy (server). If the DNS record selection is permanent, or semi-permanent, as described above, then the proxy ID selection may also be permanent or semi-permanent. It is noted that the proxy ID may include an IP address of the proxy.

The invention further provides a software program product comprising instructions arranged for a processor to carry out the method discussed above. The software program product may be stored on a tangible carrier, such as a DVD or a USB stick. Alternatively, the software program product may be stored on a server from which it may be downloaded using the Internet. The software program product may contain software instructions which can be carried out by the processor of a device, such as a server, a user device (for example a smartphone), and/or a monitoring device.

The invention additionally provides a Domain Name System (DNS) server arranged to provide a DNS record to a DNS client, the DNS server comprising:

- an input interface arranged for receiving a query from the DNS client, the DNS client having an IP address,
- a memory arranged for storing data representing a mapping function and a table of DNS records,
- a processor arranged for:

  ∘ processing the query, by using the mapping function, to produce a selection number, and
  ∘ selecting, by using the selection number, a DNS record from the table of DNS records, and

- an output interface arranged for transmitting the selected DNS record to the DNS client, wherein the mapping function is arranged for the selection number to have a substantially smaller range than the IP address.

The DNS server of the invention has the same advantages as the method discussed above. More in particular, the DNS server of the invention allows an IP address to be used to select a DNS record.

The mapping function used by the processing unit may comprise using only n final digits of the IP address, while n may be equal to or larger than 2, n being preferably smaller than 6. The mapping function may include a conversion function, while such a conversion function may comprise a hash function, for example a cryptographic hash function or a non-cryptographic hash function.

The invention further provides a communication system comprising at least one DNS server as described above. The communication system, which may be arranged for utilizing the Voice over Internet Protocol (VoIP), may further comprise at least one proxy server associated with the DNS record and at least one DNS client. The DNS client may comprise a modem.

Brief description of the drawings

The present invention will further be explained with reference to exemplary embodiments illustrated in the drawings, in which:

  Fig. 1 schematically shows a VoIP telecommunication system in which the present invention may be utilized.
  Fig. 2 schematically shows an exemplary embodiment of a mapping function as used in the present invention.
  Fig. 3 schematically shows an exemplary embodiment of a DNS server for use in the present invention.
  Fig. 4 schematically shows an exemplary embodiment of a method in accordance with the present invention.
  Fig. 5 schematically shows an exemplary embodiment of a computer program product in accordance with the present invention.
  Fig. 6 is a schematic block diagram of a general system which may be employed in embodiments of the present invention.

Detailed description of embodiments

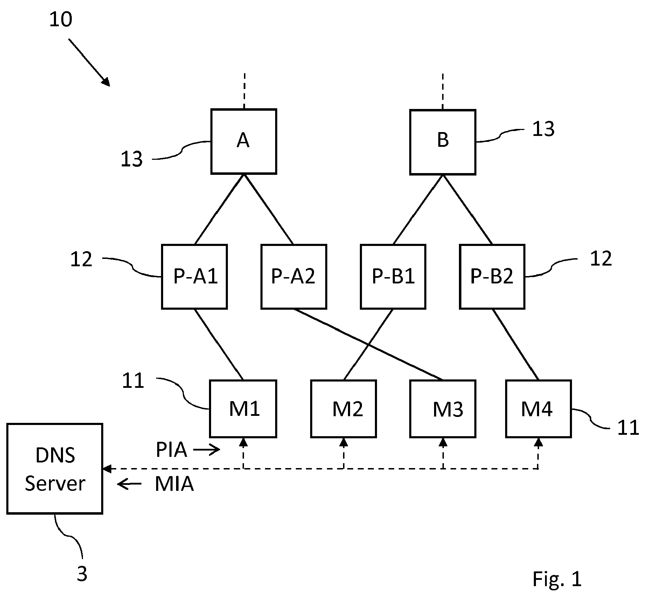

An exemplary embodiment of a VoIP (Voice over Internet Protocol) telecommunication system is schematically illustrated in Fig. 1. The VoIP telecommunication system 10 schematically illustrated in Fig. 1 includes modems 11, proxy servers 12 and exchange servers 13. The embodiment of Fig. 1 further includes a DNS server 3.

The modems 11 may be accommodated at customer premises, such as houses or office buildings. In the present embodiment, four modems 11 are shown, which are labelled M1 - M4. In actual embodiments, a smaller or larger number of modems may be used.

Each modem 11 is connected to a proxy server 12, which may also be referred to a proxy. In the example shown, four proxies 12 are provided, each modem 11 being connected to a single proxy 12. Each proxy 12 is, in turn, connected to an exchange server 13. There are, in the present example, two exchange servers 13, labelled A and B. Two proxies labelled P-A1 and P-A2 are connected with the exchange server labelled A, while two proxies labelled P-B1 and P-B2 are connected with the exchange server labelled B. It will be understood that the numbers of proxies 12 and exchange servers 13 shown is only exemplary and that other numbers of proxies and exchange servers are possible. More than two proxies 12 may be connected to a single server 13, and more than a single modem 11 may be connected to a proxy 12.

It is noted that the term "connected" as used here does not necessarily imply a fixed, physical connection. Instead, the term "connected" indicates that a device may be capable of communicating with another device. For example, a modem 11 may be able to exchange information with a certain assigned exchange server 13 via a certain assigned proxy 12 using a connection which is partially or entirely wireless.

In the embodiment shown, the third proxy P-B1 has been assigned to the second modem M2, allowing the modem M2 to communicate with the second exchange server 13. It will be understood that the exchange server 13 may be able to communicate with other servers and networks (not shown in Fig. 1).

Each modem 11 may be connected to one or more customer devices, such as landline telephone sets, computers, and (for those historically inclined) fax devices. Connections between a modem 11 and a customer device may include cables and/or wireless connections, for example using Wi-Fi.

When a (landline) telephone set or other customer premises device is activated, the modem 11 it is connected with will attempt to set up a connection with an exchange 13. As in the system 10 of Fig. 1 all connections to the exchanges 13 are routed via proxies 12, the modem 11 must first set up a connection with a proxy 12.

In order to set up a connection with a proxy 12, a modem 11 may require the IP address or fully qualified domain name (FQDN) of the proxy. Such an IP address may be provided by a database which may, for example, assign an IP address upon request from the modem. A database may be arranged to return the IP address of the proxy to be used, in response to a request from the modem. Such a request may include a modem identification (that is, a modem ID) and/or a user ID, and may be issued each time a modem is about to set up a connection with a proxy.

The IP address may also be permanently or semi-permanently stored in a modem, or at least a default IP address may be stored in a modem. Even if a default IP address is stored in a modem, the modem may still send a request to a database or to another entity to check whether the default IP address or another IP address should be used.

In accordance with the invention, to set up a connection with a proxy 12 a modem 11 may send a request to a DNS server 3, an IP address being associated with the request. This IP address (which may be referred to as MIA - Modem IP Address) associated with the request may be the IP address of the modem itself, and may be communicated as the source address of the request. The DNS server may therefore be capable of deriving the IP address from the request, for example by determining the requesting entity.

In response to the request from the modem 11, the DNS server 3 may provide an IP address of a proxy to be used by the requesting modem. This IP address (which may be referred to as PIA - Proxy IP Address) may be contained in a DNS record provided by the DNS server 3.

According to the invention, therefore, a modem 11 may send a request to a DNS server 3, which DNS server may use the IP address (MIA) associated with the request to return a DNS record associated with a proxy IP address (PIA) allowing the modem 11 to select a proxy 12 to connect with. In embodiments of the invention, the DNS record may be associated with more than one proxy IP address, for example two, three or four proxy IP addresses.

That is, the DNS record may contain or refer to a list of proxy IP addresses, and the ranking of the list may be indicative of preferences, for example the first IP address on the list being used first and the second IP address being used only when using the first IP address failed. A list of two or more proxy IP addresses offers the advantage of immediately providing an alternative address in case a proxy identified by the DNS record is not operational.

However, in other embodiments, no more than a single proxy IP address may be identified by a single DNS record, which may require the modem to issue a new request in case the originally identified proxy is not available for use.

It is noted that the proxy or proxies identified by the DNS record may be identical for two or more subsequent requests, and that the IP addresses of this or these proxies may therefore be "sticky": they may not change between requests.

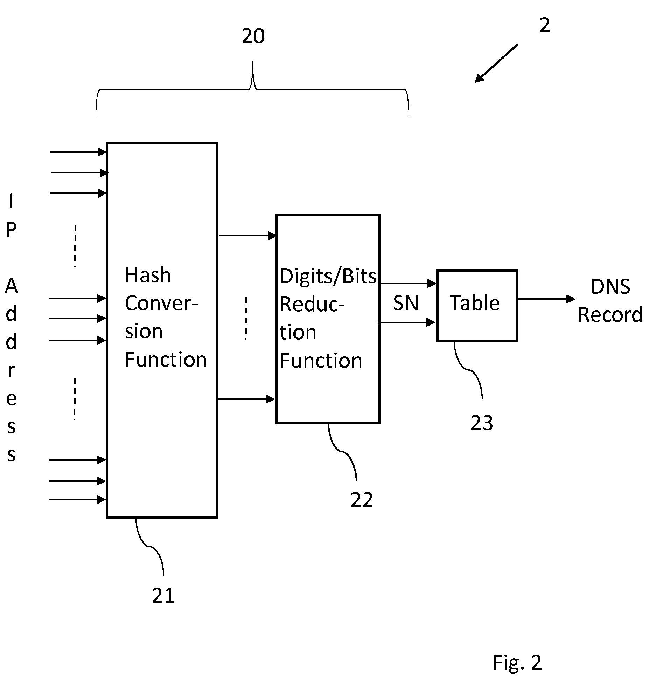

As mentioned above, the DNS server according to the invention may return a DNS record in response to a request. The DNS server may use an IP address (MIA) associated with the request and the DNS record may be associated with another IP address (PIA). However, using an IP address to retrieve a DNS record or other record is inherently difficult due to the size of IP addresses and the potential number of different IP addresses. As mentioned before, IPv4 allows 4,294,967,295 different IP addresses, while IPv6 allows even 3,40 x $10^{38}$ different IP addresses. According to the invention, a mapping function is used to reduce the number of different entries to a manageable number. This is schematically illustrated in Fig. 2.

The system 2 illustrated in Fig. 2 is shown to include a mapping function 20 and a table 23.

The mapping function 20 may include a conversion function 21 and/or a reduction function 22. In the embodiment shown, the conversion function 21 is constituted by a hash function, but the invention is not so limited and other functions which produce a smaller number of output entries than input entries may also be used.

The mapping function 20 is shown to receive an IP address, which may be the modem IP address referred to as MIA in Fig. 1. This modem IP address may include a maximum of 32 bits, typically represented as four decimal numbers (for example 179.28.128.1), in the case of IPv4, and 128 bits in the case of IPv6. These 32 or 128 bits may be supplied to the conversion function 21.

The conversion function 21 may serve two purposes:

     a. to reduce the number of bits of the IP address, and
     b. to cause a more even spread of the addresses.

In some embodiments, the conversion function may serve only one of these purposes and be arranged to either reduce the number of bits, or to cause a more even spread.

Reducing the number of bits may be achieved by the conversion function 21, for example a hash function. Such a function may output a 64 bit number when a 128 bit number is input, for example. In such a way, the number of bits, and thus the number of possible entries may be significantly reduced.

Increasing the spread of the output may be used to produce a more even distribution of the DNS records selected by the system 2. IP addresses may appear in clusters, and it may not be advantageous when all IP addresses of a cluster result in the same DNS record being selected. A hash function may also have the effect of spreading the output.

An exemplary embodiment of a hash function is given below:

     # hashing function

     def hash(a):

$$a = (a \wedge 61) \wedge (a >> 16)$$

$$a = a + (a << 3)$$

$$a = a \wedge (a >> 4)$$

$$a = a * 0x27d4eb2d$$

$$a = a \wedge (a >> 15)$$

     return a

As those skilled in the art will recognise, the symbol ">>" represents a bit shift to the right, over the number of bits indicated by the following number, while "∧" represents "to the power of". It will be understood that the example above is only exemplary, and that other hash functions may be used instead.

The number of bits output by the conversion function 21 may be smaller than the number of bits of the IP address that was input to the function. To further reduce the number of bits, and hence to further reduce the number of entries which may be selected, the mapping function 20 of Fig. 2 includes a reduction function 22 which selects a number of digits from its input. For example, assuming that the converted IP address output by the conversion function 21 includes four bytes (that is, 32 bits), then the reduction function 22 may output only two bytes, for example the last two bytes. This further reduces the number of bits and thus the number of entries from which the DNS record is to be selected. The output of the reduction function may be referred to as selection number, the number that will be used to select an entry from the table 23.

The output of the reduction function 22, the selection number SN, is input into the table or list 23 to select a DNS record. The table 23 selects the entry identified by the input and outputs the corresponding DNS record or equivalent record. The record output by the table 23 may include an IP address, such as the proxy IP address PIA, or may be associated with a proxy IP address which may be retrieved from another source.

The embodiment of Fig. 2 is shown to comprise both a conversion function 21 and a reduction function 22. In some embodiments, only one of the conversion function 21 and the reduction function 22 may be present. That is, in some embodiments the conversion function 21 may produce the selection number SN. In such embodiments, the conversion function 21 may produce a selection number SN with a relatively small range, for example, which may allow to omit the reduction function 22. In other embodiments, the conversion function 21 may be omitted and the reduction function 22 serves to produce a selection number having a relatively small range.

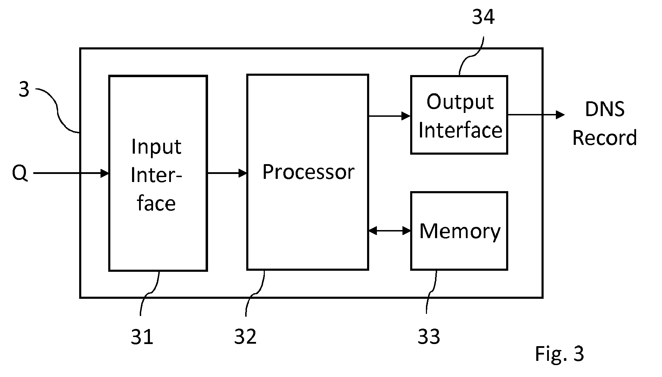

An exemplary embodiment of a DNS server 3 is schematically illustrated in Fig. 3. The DNS server 3 shown in Fig. 3 includes an input interface 31, a processor 32, a memory 33 and an output interface 34. The DNS server may include further components which are not shown in Fig. 3.

The input interface 31 may be arranged to receive a query Q from a modem (11 in Fig. 1). The input interface 31 may further be arranged to receive an IP address associated with the query Q. The IP address may be part of the query Q, or may be retrieved by the DNS server by using the query Q.

The processor 32 has, in the embodiment shown, an associated memory 33. The processor 32 may be arranged to process the received IP address and to produce a selection number (SN in Fig. 2), by using a mapping function represented by data stored in the memory 33. The processor 32 may further be arranged to select, by using the selection number, a DNS record from a table or list of DNS records represented by data stored in the memory 33. To this end, the selection unit 33 may include a table. The number of entries of the table may be defined by the range of the selection number. That is, if the selection number consists of 8 bits, for example, its range equals $2^8 = 256$ and the table may have 256 entries.

The processor 32 and the memory 33 may be arranged to carry out at least one of the conversion function 21 and the reduction function 22 of Fig. 2.

The memory 33 may contain a list or table, which table contains a plurality of entries, each entry being retrievable by supplying a selection number. The size of the table may be determined by the range of the selection number (SN) produced by the processing unit 32. The table may contain DNS records including IP addresses.

The output interface 34 may be arranged to transmit the selected DNS record, or at least the IP address associated with the selected DNS record, to the modem (11 in Fig. 1) which issued the query Q.

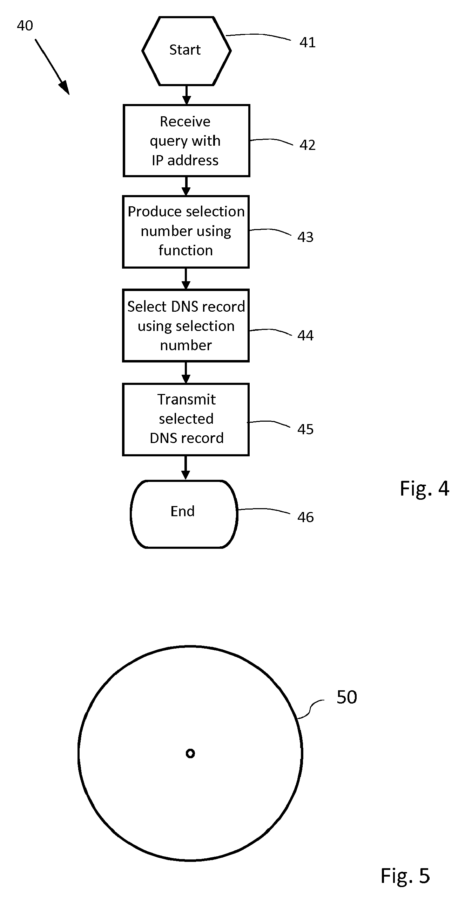

An exemplary embodiment of a method of providing a DNS record is schematically illustrated in Fig. 4. The method 40 of Fig. 4 is shown to start at action 41. At action 42, a query associated with an IP address (that is, the modem IP address MIA) may be received. At action 43, a selection number may be produced using a mapping function. At action 44, a DNS record may be selected from a table or list by using the selection number. The selected DNS record may transmitted, for example to the requesting modem, at action 45. The method may end at action 46.

As will be appreciated by one skilled in the art, aspects of the present invention may be embodied as a system, method or computer program product. Accordingly, aspects of the present invention may take the form of an entirely hardware embodiment, a software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present invention may take the form of a computer program product embodied in one or more computer readable medium(s) having computer readable program code embodied, for example, stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a solid-state drive, a random access memory (RAM), a non-volatile memory device, a read-only memory (ROM), an erasable programmable read-only memory (EPROM or Flash memory), an optical fibre, a portable compact disc read-only memory (CD-ROM), an optical storage device, a magnetic storage device, or any suitable combination of the foregoing. In the context of this disclosure, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless (using electromagnetic and/or optical radiation), wired, optical fibre, cable, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages.

The program code may execute entirely on a user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium 50 that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the functions noted in the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

It is noted that the invention relates to all possible combinations of features recited in the claims.

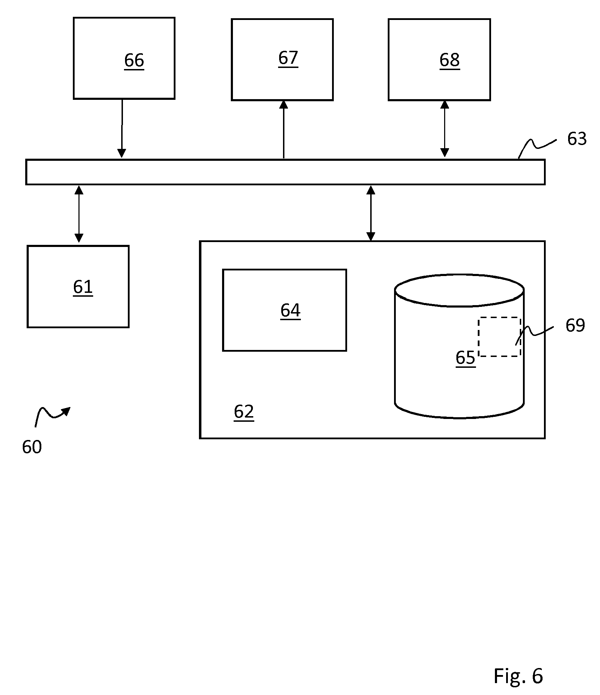

FIG. 6 is a block diagram illustrating an exemplary data processing system that may be used as a part of a user equipment or as a network node, such as server.

Data processing system 60 may include at least one processor 61 coupled to memory elements 62 through a system bus 63. As such, the data processing system 60 may store program code within memory elements 62. Further, processor 61 may execute the program code accessed from memory elements 62 via system bus 63. In one aspect, data processing system 60 may be implemented as a computer that is suitable for storing and/or executing program code. It should be appreciated, however, that data processing system 60 may be implemented in the form of any system including a processor and memory that is capable of performing the functions described within this specification.

Memory elements 62 may include one or more physical memory devices such as, for example, local memory 64 and one or more bulk storage devices 65. Local memory may refer to random access memory or other non-persistent memory device(s) generally used during actual execution of the program code. A bulk storage device 65 may be implemented as a hard drive or other persistent data storage device. The data processing system 60 may also include one or more cache memories (not shown) that provide temporary storage of at least some program code in order to reduce the number of times program code must be retrieved from bulk storage device 65 during execution.

Input/output (I/O) devices depicted as input device 66 and output device 67 may optionally be coupled to the data processing system 60. Examples of input devices may include, but are not limited to, for example, a keyboard, a pointing device such as a mouse, a touchscreen, or the like. Examples of output device may include, but are not limited to, for example, a monitor or display, speakers, or the like. Input device 66 and/or output device 67 may be coupled to data processing system 60 either directly or through intervening I/O controllers. A network adapter 68 may also be coupled to data processing system 60 to enable it to become coupled to other systems, computer systems, remote network devices, and/or remote storage devices through intervening private or public networks. The network adapter 68 may comprise a data receiver for receiving data that is transmitted by said systems, devices and/or networks to said data processing system 60 and a data transmitter for transmitting data to said systems, devices and/or networks. Modems, cable modems, and Ethernet cards are examples of different types of network adapters that may be used with data processing system 60.

As pictured in FIG. 6, memory elements 62 may store an application 69. It should be appreciated that data processing system 60 may further execute an operating system (not shown) that can facilitate execution of the application. Applications implemented in the form of executable program code can be executed by data processing system 60, for example, by processor 61. Responsive to executing the application 69, the data processing system 60 may be configured to perform one or more operation as disclosed in the present application in further detail.

Data processing system 60 may represent a server as described herein, in which case application 69, when executed, may configure data processing system 60 to perform operations as described in the present disclosure.

It is noted that the method has been described in terms of steps to be performed, but it is not to be construed that the steps described must be performed in the exact order described and/or one after another. One skilled in the art may envision to change the order of the steps and/or to perform steps in parallel to achieve equivalent technical results.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The abstract should not be used to limit the scope of the claims, and neither should reference numbers in the claims.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiments were chosen and described in order to best explain the principles of the invention and the practical application, and to enable others of ordinary skill in the art to understand the invention for various embodiments with various modifications as are suited to the particular use contemplated.

Various embodiments of the invention may be implemented as a program product for use with a computer system or a processor, where the program(s) of the program product define functions of the embodiments (including the methods described herein). In one embodiment, the program(s) can be contained on a variety of non-transitory computer-readable storage media (generally referred to as "storage"), where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (for example, read-only memory devices within a computer such as CD-ROM disks readable by a CD-ROM drive, ROM chips or any type of solid-state non-volatile semiconductor memory) on which information is permanently stored; and (ii) writable storage media (for example, flash memory, floppy disks within a diskette drive or hard-disk drive or any type of solid-state random-access semiconductor memory) on which alterable information is stored.

It will therefore be understood by those skilled in the art that the present invention is not limited to the embodiments mentioned above and that many additions and modifications are possible without departing from the scope of the invention as defined in the appending claims.

**Claims**

1. A method to provide a Domain Name System record to a Domain Name System client (11), the method comprising:

   - receiving a query from the Domain Name System client (11) having an Internet Protocol address,
   - processing the Internet Protocol address of the Domain Name System client by using a mapping function (20) to produce a selection number (SN),
   - selecting, by using the selection number, at least one Domain Name System record from a table (23) of Domain Name System records, and
   - transmitting the at least one selected Domain Name System record to the Domain Name System client (11),

   wherein the mapping function (20) is arranged for the selection number (SN) to have a substantially smaller range than the Internet Protocol address.

**2.** The method according to claim 1, wherein the mapping function (20) comprises a reduction function (22) using only n least significant digits of the IP address, wherein n is equal to or larger than 2, and wherein n is preferably smaller than 6, more preferably smaller than 4.

**3.** The method according to claim 1 or 2, wherein the mapping function (20) comprises a conversion function (21) having input values and output values, the output values being more evenly spread across their range than the input values.

**4.** The method according to claim 3, wherein the conversion function (21) comprises a hash function.

**5.** The method according to any of the preceding claims, wherein the range of the selection number (SN) is equal to, or smaller than, 100.

**6.** The method according to claim 5, wherein selecting the at least one Domain Name System record is carried out on the basis of a sub-range of the selection number (SN).

**7.** The method according to any of the preceding claims, wherein the mapping function (20) is arranged to select the same at least one Domain Name System record in response to the same selection number (SN).

**8.** A software program product comprising instructions arranged for a processor to carry out the method according to any of the preceding claims.

**9.** A Domain Name System server (3) arranged to provide a Domain Name System record to a Domain Name System client (11), the Domain Name System server comprising:

   - an input interface (31) arranged for receiving a query from the Domain Name System client, the Domain Name System client having an IP address,
   - a memory (33) arranged for storing data representing a mapping function (20) and a table (23) of Domain Name System records,
   - a processor (32) arranged for:

      o processing the query, by using the mapping function (20), to produce a selection number (SN), and
      o selecting, by using the selection number, a Domain Name System record from the table (23) of Domain Name System records, and

   - an output interface (34) arranged for transmitting the selected Domain Name System record to the Domain Name System client,

wherein the mapping function (20) is arranged for the selection number to have a substantially smaller range than the IP address.

**10.** The Domain Name System server according to claim 9, wherein the mapping function is arranged for using only n least significant digits of the IP address, wherein n is equal to or larger than 2, and wherein n is preferably smaller than 6.

**11.** The Domain Name System server according to claim 9 or 10, wherein the mapping function (20) comprises a conversion function (21), and wherein the conversion function (21) preferably comprises a hash function.

**12.** A communication system (10), comprising at least one Domain Name System server (3) according to any of claims 9 to 11.

**13.** The communication system according to claim 12, further comprising at least one proxy server (12) associated with the Domain Name System record and at least one Domain Name System client (11).

**14.** The communication system according to claim 12 or 13, wherein the Domain Name System client (11) comprises a modem.

**15.** The communication system according to claim 12, 13 or 14, arranged for Voice over Internet Protocol.

Fig. 1

Fig. 2

Fig. 3

40

Start — 41

Receive
query with
IP address — 42

Produce selection
number using
function — 43

Select DNS record
using selection
number — 44

Transmit
selected
DNS record — 45

End — 46

Fig. 4

— 50

Fig. 5

Fig. 6

Europäisches
Patentamt

European
Patent Office

Office européen
des brevets

# EUROPEAN SEARCH REPORT

Application Number

EP 16 18 7483

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 517 407 A2 (CITRIX SYSTEMS INC [US]) 31 October 2012 (2012-10-31) * paragraph [0192] - paragraph [0242] * ----- | 1-15 | INV. H04L29/12 G06F9/50 H04L29/08 H04L29/06 |
| X | US 2010/131646 A1 (DRAKO DEAN [US]) 27 May 2010 (2010-05-27) * abstract * * paragraph [0037] - paragraph [0049] * * paragraph [0064] - paragraph [0068] * * paragraph [0083] - paragraph [0112] * ----- | 1-15 | |
| X | ACM, 2 PENN PLAZA, SUITE 701 - NEW YORK USA, 12 May 2007 (2007-05-12), pages 351-359, XP040060138, * page 352, left-hand column, line 7 - page 355, right-hand column, line 3; figure 2 * ----- | 1-15 | |

TECHNICAL FIELDS
SEARCHED      (IPC)

H04L
G06F

The present search report has been drawn up for all claims

| Place of search | Date of completion of the search | Examiner |
|---|---|---|
| Munich | 8 February 2017 | Lebas, Yves |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 16 18 7483

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2017

| Patent document cited in search report | | Publication date | Patent family member(s) | | Publication date |
|---|---|---|---|---|---|
| EP 2517407 | A2 | 31-10-2012 | CN | 102771084 A | 07-11-2012 |
| | | | EP | 2517407 A2 | 31-10-2012 |
| | | | US | 2011153938 A1 | 23-06-2011 |
| | | | WO | 2011079224 A2 | 30-06-2011 |
| US 2010131646 | A1 | 27-05-2010 | NONE | | |

EPO FORM P0459

For more details about this annex : see Official Journal of the European Patent Office, No. 12/82